# EUROPÄISCHE PATENTANMELDUNG

(11) **EP 0 711 087 A2**
(43) Veröffentlichungstag der Anmeldung: **08.05.1996**
(21) Anmeldenummer: 95111172.3
(22) Anmeldetag: 15.07.1995
(51) Int. Cl.: H04Q 1/14, H01R 9/00, H05K 5/00

(54) **Montagevorrichtung für RJ-Verbindungselemente der Nachrichten- und Datentechnik (Patch Panel)**

(30) Priorität: 03.11.1994 DE 4440455
(71) Anmelder: KRONE Aktiengesellschaft, D-14167 Berlin (DE)
(72) Erfinder: Stachulla, Peter, Cheltenham GL52 2JD (GB)

(57) **Zusammenfassung**

Die Erfindung bezieht sich auf eine Montagevorrichtung für RJ-Verbindungselemente der Nachrichten- und Datentechnik (Patch-Panel).

Die Aufgabe der Erfindung, eine Montagevorrichtung der gattungsgemäßen Art zu entwickeln, mit der eine übersichtliche, schnelle, zuverlässige und flexible Einbringung von RJ-Verbindungselementen und deren Verkabelung gewährleistet sind, wird dadurch gelöst, daß eine Montageplatte 1 mit Aufnahmen 4 und mit Aussparungen 14, in die RJ-Verbindungselemente 6 unmittelbar eingebracht sind, eine rückseitige Kabelführung 2, die mit den jeweiligen Aufnahmen 4 räumlich korrespondieren, und eine frontseitige Kabelführung 3 vorgesehen sind.

## Beschreibung

Die Erfindung betrifft eine Montagevorrichtung für RJ-Verbindungselemente der Nachrichten- und Datentechnik (Patch-Panel) gemäß dem Oberbegriff des Anspruches 1.

Montagevorrichtungen für RJ-Verbindungselemente, wie RJ-Dosen-Einsätze (RJ45-Buchsen) mit Schneid-Klemm-Kontakten, werden als Patch-Panels zur Inhouse-Verkabelung benutzt und z.B. in 19''-Verteilerschränken der Fernmelde- und Datentechnik eingebaut. Mittels der Patch-Panels erfolgt eine mechanische und/oder elektrische Anpassung an Systemschnittstellen.

Die bekannten Montagevorrichtungen für RJ-Verbindungselemente werden durch einen metallischen Montagerahmen gebildet, in welche die RJ-Verbindungselemente eingebracht sind. Der Montagerahmen wird über Befestigungsbohrungen mit dem Gestell eines 19''-Verteilerschrankes verbunden. Die Kabelführung erfolgt gesondert über Patchkabel-Führungen, die jedoch keine direkte Zuordnung zu den RJ-Buchsen ermöglichen ( KRONE LINK mit LSA PROFIL, Planungshinweise, Ausgabe 06.92 ).

Der Erfindung liegt von daher die Aufgabe zugrunde, eine Montagevorrichtung der gattungsgemäßen Art zu entwickeln, mit der eine übersichtliche, schnelle, zuverlässige und flexible Einbringung von RJ-Verbindungselementen und deren Verkabelung gewährleistet sind.

Die Lösung der Aufgabe ergibt sich aus den kennzeichnenden Merkmalen des Anspruches 1. Das unmittelbare Einbringen der RJ-Verbindungselemente ohne Zwischenelemente in die Montagevorrichtung gewährleistet ein schnelles und leichtes Montieren der z.B. RJ-Dosen-Einsätze. Es ist zudem ein Lösen der RJ-Verbindungselemente von der Vorder- und von der Rückseite möglich. Durch die unmittelbare Zuordnung der Kabelführung mit den Kabelführungsrinnen zu den Aufnahmen für die RJ-Verbindungselemente ist eine unmittelbare Befestigung der zugeführten Kabel am RJ-Verbindungselement möglich und damit eine große Übersichtlichkeit bei der Verkabelung gewährleistet. Die Kabelführung ist so beweglich, daß sie sich aus dem Zugangsbereich der RJ-Verbindungselemente entfernt, dabei aber die Kabel weiterhin führt. Die Kabelführung kann bis zu einer Stellung gebracht werden, die der Standardbauhöhe von 19''- bzw. ETSI-Verteilergestellen entspricht.

Weitere vorteilhafte Ausgestaltungen der Erfindung sind in den Unteransprüchen enthalten.

Die Erfindung ist nachfolgend anhand eines in den Zeichnungen dargestellten Ausführungsbeispieles einer Montagevorrichtung näher erläutert. Es zeigen:
- Fig. 1: eine perspektivische Darstellung der Montagevorrichtung von der Rückseite gesehen,
- Fig. 2: eine perspektivische Teilansicht der Frontseite der Montageplatte nach Fig. 1,
- Fig. 3: eine perspektivische Teilansicht der Rückseite der Montageplatte nach Fig. 1,
- Fig. 4: die teilweise geschnittene Seitenansicht der Montageplatte nach Fig.1,
- Fig. 5: eine perspektivische Draufsicht auf die Kabelführung,
- Fig. 6: die Vorderansicht der Kabelführung gemäß Fig. 5,
- Fig. 7: die Draufsicht der Kabelführung gemäß Fig. 5 und
- Fig. 8: eine perspektivische Darstellung des seitlichen Kabelführungsringes.

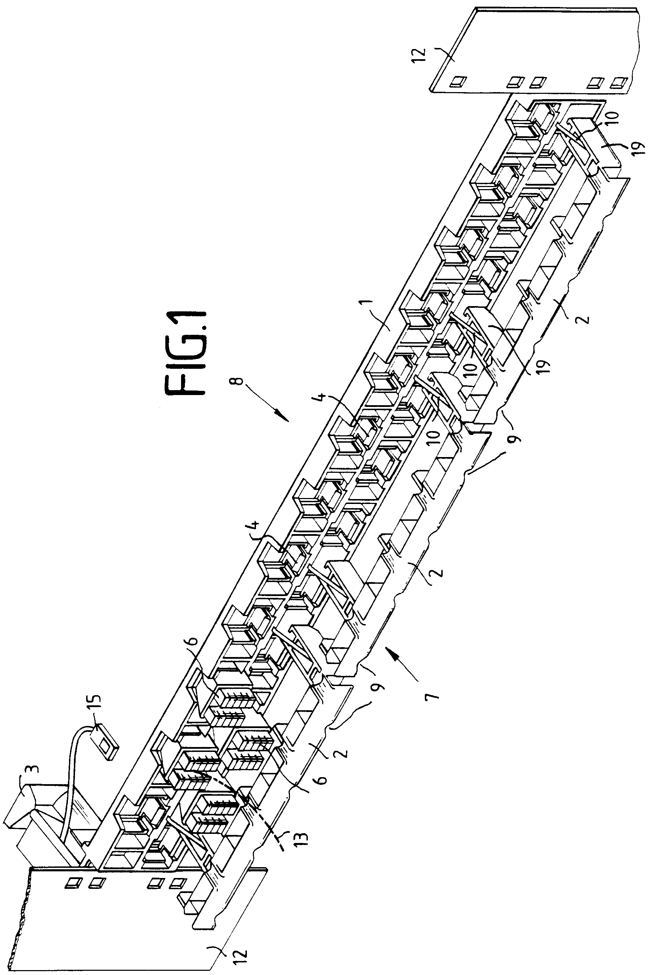

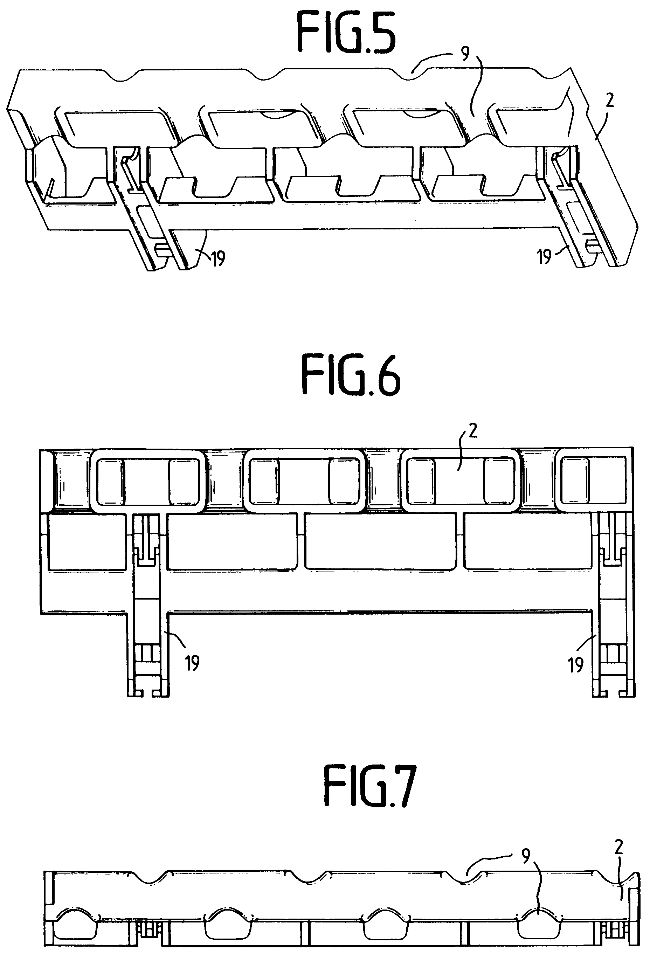

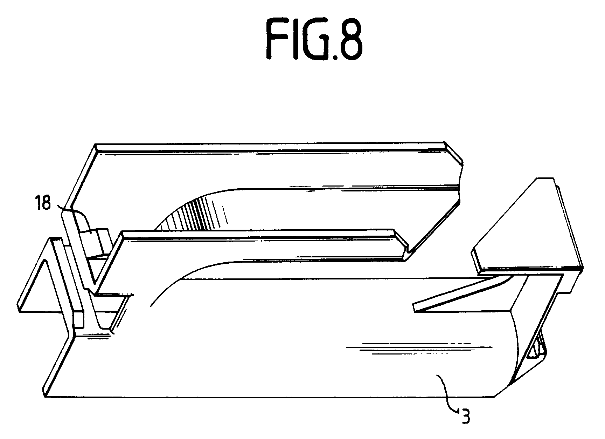

Die Montagevorrichtung (Patch-Panel) wird entsprechend der Darstellung in der Fig. 1 im wesentlichen aus einer Montageplatte 1 aus Kunststoff für RJ-Verbindungselemente 6, aus einer auf der Montageplatte 1 bewegbaren rückseitigen Kabelführung 2 (Fig. 5 bis 7) und aus einem frontseitigen, seitlichen Kabelführungsring 3 (Fig. 8), der gleichzeitig zur Befestigung der Montageplatte 1 an einem 19''-bzw. ETSI-Verteilergestell 12 dient, gebildet. Der seitliche Kabelführungsring 3 kann auch nur zur frontseitigen Kabelführung ausgebildet sein. Die Montageplatte 1 bildet dabei das eigentliche Patch-Panel.

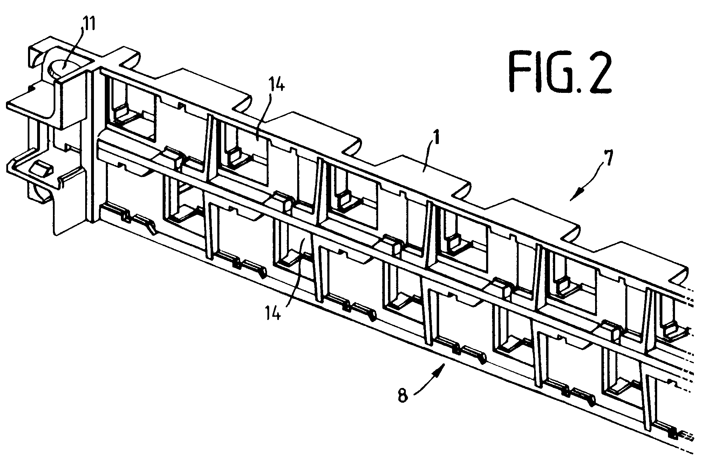

Die Fig. 2 bis 4 zeigen in verschiedenen Ansichten einen Ausschnitt der Montageplatte 1 für die Montage der RJ-Verbindungselemente 6.

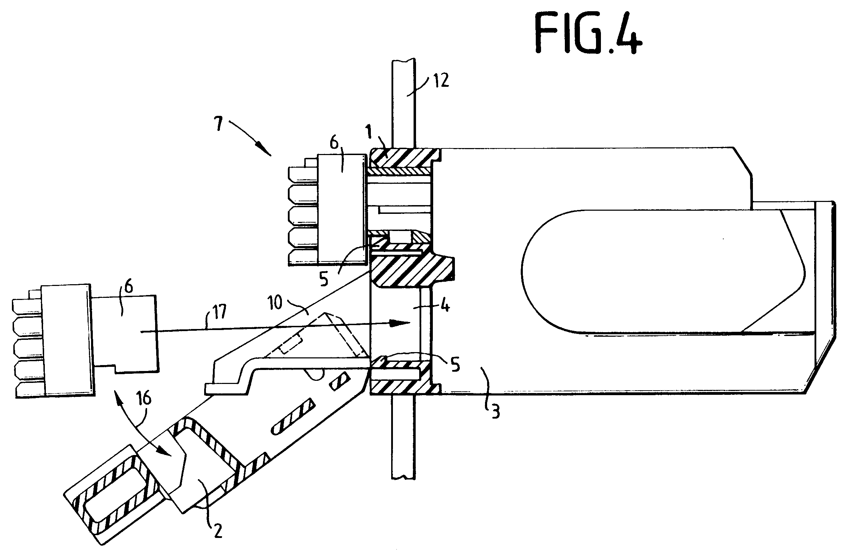

Nach der Darstellung in den Fig. 1,3 und 4 werden die RJ-Verbindungselemente 6 von der Rückseite 7 der Montageplatte 1 (Fig. 4) in Aufnahmen 4 über Rastverbindungen 5 in Pfeilrichtung 17 lösbar eingerastet. Die Rastverbindungen 5 werden beispielsweise durch Clips gebildet (Fig. 4). Die RJ-Verbindungselemente 6 können über mindestens zwei Punkte mit einem nicht dargestellten Erdungsblech leitend verbunden werden. Von der Frontseite 8 der Montageplatte 1 (Fig. 1,2) können in die montierten RJ-Verbindungselemente 6, z.B. RJ45-Buchsen, über die Aussparungen 14 (Fig. 2) die entsprechenden RJK-Stecker 15 ( Fig. 1) eingebracht werden.

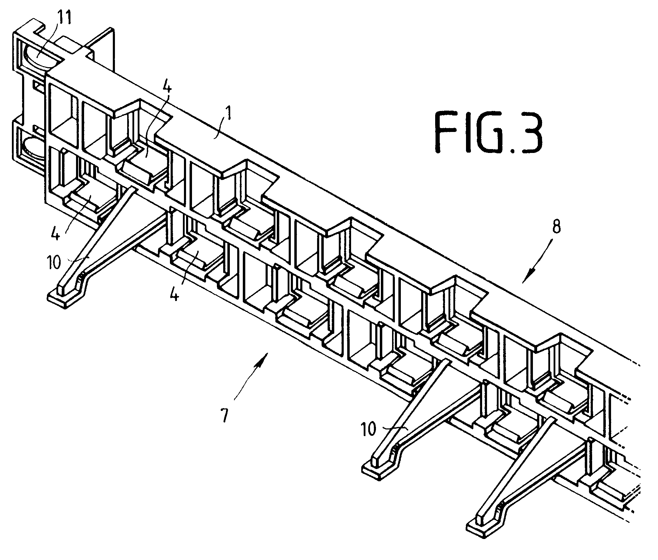

Die Montageplatte 1 enthält entsprechend der Fig. 1 eine Vielzahl von Aufnahmen 4, insbesondere vierundzwanzig Aufnahmen 4 für vierundzwanzig RJ-Verbindungselemente 6. Jede Aufnahme 4 der Montageplatte 1 ist mit einer Kabelführungsrinne 9 der Kabelführung 2 so gekoppelt, daß eine geordnete Kabelführung von den Anschlüssen der RJ-Verbindungselemente 6 her erfolgen kann. Die Kabelführungen 2 sind auf der Rückseite 7 der Montageplatte 1 (Fig. 3) über Rastlaschen 10 der Montageplatte 1 und über Laschenaufnahmen 19 (Fig. 6) an den Kabelführungen 2 (Fig. 1,4) eingebracht. An den Kabelführungen 2 sind die an die RJ-Verbindungselemente 6 herangeführten Kabel 13 (Fig. 1) z.B mit einem Kabelband befestigt. Die Kabelführung 2 ist im Beispiel für acht Kabel 13 ausgelegt, so daß für die beschriebene Montageplatte 1 für vierundzwanzig RJ-Verbindungselemente 6 drei Kabelführungen 2 installiert werden (Fig. 1).

Nach Fig. 4 ist die Kabelführung 2 in Pfeilrichtung 16 so bewegbar, daß sie sich aus dem Zugangsbereich der RJ-Verbindungselemente 6 entfernt. Auch in dieser ausgeschwenkten Stellung führt die Kabelführung 2 die Kabel 13 bis zu den RJ-Verbindungselementen 6. Die Kabelführung 2 kann soweit eingeschwenkt werden, daß sie die Standardbauhöhe des Verteilergestells 12 nicht überragt.

Die Montageplatte 1 ist über den seitlichen Kabelführungsring 3 (Fig. 1,8) an das 19''- bzw. ETSI-Verteilergestell 12 oder dgl. montierbar. Der seitliche Kabelführungsring 3 ist in der Ausnehmung 11 (Fig. 2,3) auf der Frontseite 8 der Montageplatte 1 um 45° bewegbar gelagert. Er übt primär die Funktion der frontseitigen Kabelführung aus. Im vorliegenden Beispiel dient er zusätzlich zur Befestigung der Montageplatte 1 am Verteilergestell 12. Nach der Darstellung in der Fig. 8 ist der seitliche Kabelführungsring 3 dazu so ausgebildet, daß er in die Montageplatte 1 über eine Rastvorrichtung 18 fest eingeschnappt werden kann und zur seitlichen Führung der RJ45-Steckerkabel auf der Frontseite 8 der Montagevorrichtung dient.

Die Montageplatte 1 (Patch-Panel) ist aus Kunststoff gefertigt und weist eine Verstärkung durch eine Kunststoff- oder Metallschiene oder durch eine Gasfüllung auf.

### BEZUGSZEICHENLISTE

- 01: Montageplatte
- 02: Kabelführung
- 03: Kabelführungsring
- 04: Aufnahme
- 05: Rastverbindung
- 06: RJ-Verbindungselement
- 07: Rückseite
- 08: Frontseite
- 09: Kabelführungsrinne
- 10: Rastlaschen
- 11: Ausnehmung
- 12: Verteilergestell
- 13: Kabel
- 14: Aussparung
- 15: Stecker
- 16: Pfeil
- 17: Pfeil
- 18: Rastvorrichtung
- 19: Laschenaufnahme

## Patentansprüche

1. Montagevorrichtung für RJ-Verbindungselemente der Nachrichten- und Datentechnik (Patch-Panel), **gekennzeichnet durch** eine Montagenlatte (1) mit Aufnahmen (4) und mit Aussparungen (14), in die RJ-Verbindungselemente (6) eingebracht sind, eine rückseitige Kabelführung (2), die mit den jeweiligen Aufnahmen (4) räumlich korrespondieren.

2. Montagevorrichtung nach Anspruch 1, dadurch gekennzeichnet, daß die rückseitige Kabelführung (2) mit der Montageplatte (1) verbunden ist und Kabelführungsrinnen (9) aufweist, die mit den jeweiligen Aufnahmen (4) räumlich korrespondieren, und daß die frontseitige Kabelführung (3) durch einen seitlichen Kabelführungsring (3) gebildet ist.

3. Montagevorrichtung nach den Ansprüchen 1 und 2, dadurch gekennzeichnet, daß der seitliche Kabelführungsring (3) zusätzlich zur Befestigung der Montageplatte (1) an einem Verteilergestell (12) oder dgl. ausgebildet ist.

4. Montagevorrichtung nach Anspruch 1, dadurch gekennzeichnet, daß die rückseitige Kabelführung (2) und der seitliche Kabelführungsring (3) beweglich in der Montageplatte (1) angeordnet sind.

5. Montagevorrichtung nach den Ansprüchen 1 bis 4, dadurch gekennzeichnet, daß die RJ-Verbindungselemente (6) mittels Clips in den Aufnahmen (4) lösbar befestigt sind.

6. Montagevorrichtung nach den Ansprüchen 1 bis 5, dadurch gekennzeichnet, daß die Montageplatte (1) aus Kunststoff besteht.

7. Montagevorrichtung nach Anspruch 6, dadurch gekennzeichnet, daß die Montageplatte (1) durch eine Kunststoff- und/oder Metallschiene und/oder durch eine Gasfüllung verstärkt ist.
